Europäisches Patentamt

European Patent Office

Office européen des brevets

(19)

(11) Publication number: **0 423 990 A1**

# EUROPEAN PATENT APPLICATION

(21) Application number: **90310920.5**

(22) Date of filing: **04.10.90**

(51) Int. Cl.⁵: **F16B 7/04, F16B 7/18**

(30) Priority: **06.10.89 JP 260155/89**

(43) Date of publication of application:
**24.04.91 Bulletin 91/17**

(84) Designated Contracting States:
**DE FR GB**

(71) Applicant: **KABUSHIKI KAISHA HOKY**
**498 Komagidai**
**Nagareyama-shi, Chiba(JP)**

(72) Inventor: **Tsuchiya, Toshihiro**
**2-15 Kayano-cho, Kashiwa-shi**
**Chiba(JP)**
Inventor: **Suzuki, Yasuhiro**
**1-35-8 Adachi, Adachi-Ku**
**Tokyo(JP)**

(74) Representative: **Waldren, Robin Michael et al**
**Marks & Clerk, 57-60 Lincoln's Inn Fields**
**London WC2A 3LS(GB)**

(54) **Pipe fixture.**

(57) A pipe fixture for tightly connecting pipes (1,2) with each other or connecting a pipe (81) with a stationary member (82) typically comprises a first and second hollow fitting members (10,20) fitted in first and second pipes (1,1). Each fitting member is formed with a split groove (13) fittedly engaged with a protuberance (1a,2a) formed in an inner periphery of the pipe concerned, and has an inner periphery formed with internal threads each having a large thread angle falling within a range varying from 120° to 160°, and an inner flange (11,21) disposed in contact with an inner end face of the pipe con-cerned. The pipe fixture also includes a connecting rod (30) formed with external threads (31) engaged with the internal threads. Upon assemblage, after the fitting members are screwed onto the connecting rod until their inner flanges are in contact with each other, these fitting member are further rotated. This causes the internal threads to run on the external threads, so that the fitting members are radially expanded to be brought into contact with the pipes, and axially urged to each other, whereby these pipes are firmly connected.

FIG.1

## PIPE FIXTURE

The present invention relates to a pipe fixture for easily and tightly fixing pipes to each other or fixing a pipe to a fixed member.

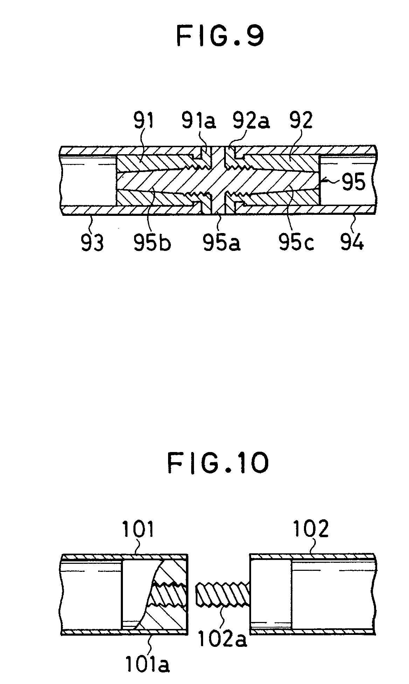

In order generally to connect two metal pipes to each other, a known pipe fixture for engaging a nut and bolt comprises a nut fixed in a pipe and a bolt adapted for insertion into the nut and fixed in another pipe, as shown in Fig. 10.

With this fixture, the nut and bolt have outer diameters slightly smaller than the inner diameters of the pipes to be connected, and after insertion, the nut and bolt are fixed in place within their respective pipes by punching the surface of each pipe at several points.

However, this kind of conventional fixture has defects in that the axis of the pipes can be dislocated from the axis of the nut and bolt if punching is not done uniformly in every direction and that the punching may not work properly due to elasticity of the pipes. Moreover, a play or looseness is likely to occur by reason that, even if punching works, the nut and bolt only come into contact with the pipe at the several punching points.

Another fixture of this type free from these drawbacks is also known, as disclosed in Japanese Utility Model Publication No. 30746/1981. As shown in Fig. 9, this fixture comprises first and second fitting members 91, 92 respectively fitted into the first and second pipes 93, 94 which are to be connected to each other, and a connecting member 95 fitted into the fitting members.

The fitting members 91, 92 have inner flanges 91a, 92a, and are each formed with a tapered axial bore which is formed with internal threads. The connecting member 95 has a center flange 95a, and is comprised of first and second tapered halves 95b, 95c each formed with external threads.

To connect the pipes 93, 94 with the pipe fixture of Fig. 9, each fitting member is inserted into a corresponding pipe 93 or 94 until its inner flange 91a or 92a is brought into contact with the inner end face of the pipe concerned. Then, the first tapered half 95b of the connecting member 95 is screwed into the tapered bore of the first fitting member 91 until the center flange 95a is brought into contact with the inner flange 91a, so that the fitting member 91 is radially expanded by the first tapered half 95b thus screwed, and is in urged contact with the inner peripheral face of the first pipe 93. Whereupon, the second fitting member 92 fitted in the second pipe 94 is screwed onto the second tapered half 95c of the connecting member 95 until the inner flange 92a of the second fitting member 92 is brought into contact with the center flange 95a, whereby the second fitting member 92 is radially expanded and in urged contact with the inner peripheral face of the second pipe 94.

The pipe fixture shown in Fig. 9 has the advantage that the number of parts can be reduced and that the pipes can be tightly connected to each other. However, this fixture has a defect in that positive connection of the pipes 93, 94 cannot be achieved, if either one of these pipes is larger or smaller than a predetermined value of inner diameter.

Namely, if the inner diameter of either one of the pipes 93, 94 is smaller than the predetermined value, the insertion of the associated one tapered half of the connecting member 95 into the tapered bore of the associated one fitting member 91 or 92 is prevented just when the same fitting member reaches a state wherein further radial expansion of the fitting member is no longer possible. In this case, a gap is produced between the inner flange of the fitting member 91 or 92 and the center flange 95a of the connecting member 95. This results in stress concentration on that part of the pipe fixture which corresponds to the gap when a bending force is applied to the pipe fixture through the pipes 93, 94 connected by the fixture. Thus, the pipe fixture cannot provide rigid connection between the pipes. Also, appearance of that section at which the pipes are connected is degraded.

On the other hand, if the inner diameter of either one of the pipes 93, 94 is larger than the predetermined value, the insertion of the associated one tapered half 95b or 95c into the tapered bore of the fitting member 91 or 92 concerned is prevented just when the center flange 95a is in urged contact with the associated inner flange 91a or 92a. At that time, the fitting member 91 or 92 is not fully expanded by the tapered half 95b or 95c, so that the fitting member 91 or 92 is not sufficiently urged to the pipe 93 or 94. This produces the play between the fitting member and the pipe, which leads to stress concentration at a concerned part of the pipe fixture.

In addition to the aforesaid strict requirement regarding the inner diameters of the pipes 93 and 94, similar strict requirements are present in connection with the inner and outer diameters of the fitting members 91, 92, the diameters of the tapered halves 95b, 95c of the connecting member 95, and the thicknesses of the center and inner flanges 95a, 91a sand 92a. After all, intended rigid connection of the pipes 93 and 94 cannot be achieved by the pipe fixture of Fig. 9, if any one of the requirements regarding the sizes of the various components of the fixture is not met.

Although different types of arrangements including tapered components for fixedly connecting a pipe with a fixed member are also known, such arrangements still entail drawbacks similar to those mentioned above.

## Summary of the Invention

An object of the present invention is to provide a pipe fixture which is capable of achieving rigid pipe connection free from looseness at its pipe connecting section, even if a pipe and pipe fixture components have variations in their sizes.

According to the present invention, a pipe fixture comprises at least one hollow member and a connecting member.

The or each hollow fitting member is fitted in a pipe in such a manner that relative rotation between the fitting member and the pipe is prevented, whereas relative axial movement therebetween is permitted. Each or the hollow fitting member is formed with a split groove extending along an axis of the fitting member, and has an inner periphery which is formed with internal threads each having a predetermined large thread angle. The connecting member is formed with external threads which are engaged with the internal threads of each or the fitting member.

## Brief Description of the Drawings

Fig. 1 is a longitudinal section view showing a pipe fixture according to a first embodiment of the present invention;

Fig. 2 is an enlarged fragmentary sectional view showing threaded engagement between a first fitting member and a connecting rod, and corresponding to part encircled by broken line on the left in Fig. 1;

Fig. 3 is a view, similar to Fig. 2, showing threaded engagement between a second fitting member and the connecting rod, and corresponding to part encircled by broken line on the right in Fig. 1;

Fig. 4 is an exploded fragmentary perspective view showing part of the pipe fixture of Fig. 1;

Fig. 5 is a fragmentary longitudinal section view showing engagement between the fitting member and the connecting rod prior to forced rotation of the connecting rod;

Fig. 6 is a view, similar to Fig. 5, showing engagement between the fitting member and the connecting rod after the forced rotation of the connecting rod;

Fig. 7A is a fragmentary longitudinal sectional view showing a pipe fixture according to a second embodiment of the present invention;

Fig. 7B is a perspective view showing a fitting member of Fig. 7A;

Fig. 8 is a fragmentary longitudinal sectional view showing a pipe fixture according to a third embodiment of the present invention;

Fig. 9 is a fragmentary longitudinal section view showing a conventional pipe fixture; and

Fig. 10 is a view, similar to Fig. 9, showing another conventional pipe fixture.

## Detailed Description

With reference to the appended drawings, preferred embodiments of the present invention are as follows.

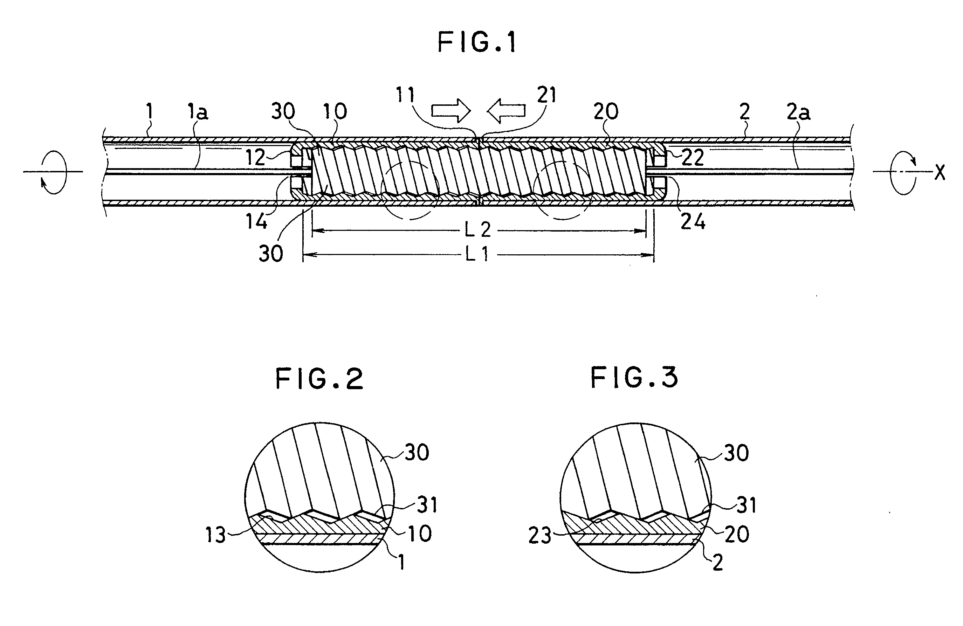

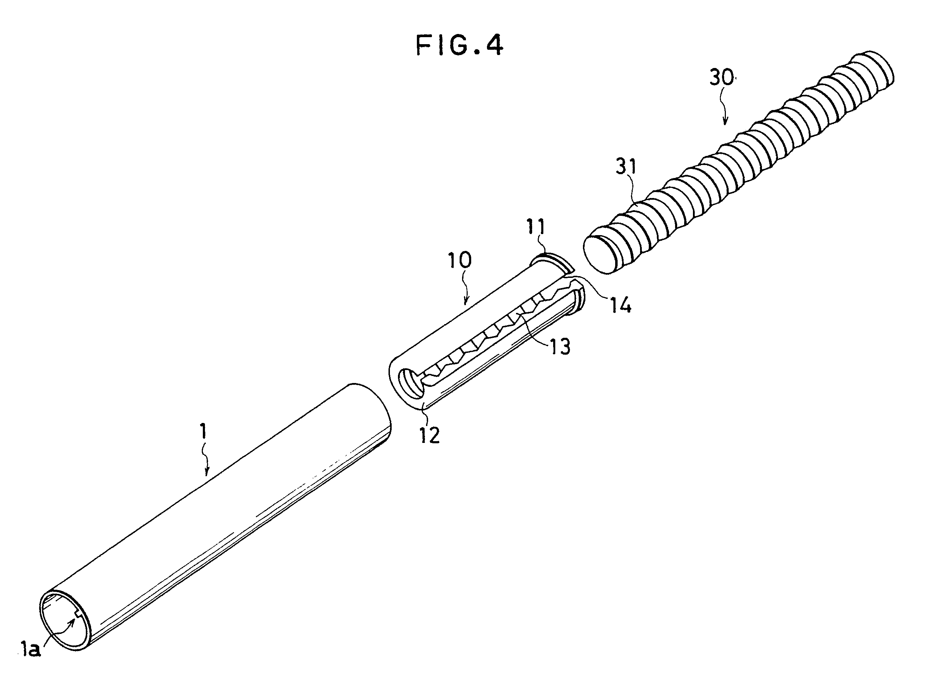

Referring to Figs. 1 - 4, a pipe fixture according to a first embodiment of the present invention is shown, which is arranged to connect two pipes with each other. Preferably, the pipes connected by the pipe fixture is disposed horizontally, when this arrangement is in use. In the present embodiment, these pipes, i.e., first and second pipes 1 and 2, which are comprised of cylindrical pipes having the same inner diameter, are formed by extrusion molding so that each pipe has the inner peripheral face formed with a linear protrusion 1a or 2a axially extending from an inner end thereof over a desired length.

The pipe fixture comprises first and second fitting members 10 and 20, having substantially the same construction. Each fitting member 10 or 20 is comprised of a cylindrical hollow pipe made of synthetic resin, metal or the like and having an outer diameter slightly smaller than the inner diameter of the pipes 1 and 2. Further, each fitting member 10 or 20, provided at its inner end with an inner flange 11 or 21 and provided at its outer end with a stopper 12 or 22, has an inner peripheral face thereof formed with internal threads 13 or 23. An angle of the internal threads 13, 23 is set to a considerably large predetermined value which falls within a range varying from 120° to 160°. In this embodiment, the thread angle is set to 150°.

Further, the fitting members 10, 20 are each formed with a split groove or expansion groove 14 or 24 axially extending over the entire length thereof, so that each fitting member is permitted to be radially expanded. These grooves 14, 24 are respectively engaged with the protuberances 1a, 2a of the pipes 1, 2, and respectively serve as stoppers for preventing the fitting members 10, 20 from rotating relative to the pipes 1, 2.

The pipe fixture further comprises a connecting member 30 which is comprised of a cylindrical metal rod and which has an outer peripheral face thereof formed with external threads 31 adapted for engagement with the internal threads 13, 23 of the fitting members 10, 20. The axial length L2 of the connecting rod 30 is set to a value slightly smaller than the sum L1 of the axial lengths of the first and second fitting members 10, 20 for the reason mentioned later. Meanwhile, the length of each protuberance 1a or 2a is set to a value larger than the length of each fitting member.

To connect the pipes 1 and 2 with each other by the use of the aforementioned pipe fixture, at first, the fitting members 10, 20 are respectively inserted into the pipes 1, 2 from their inner open ends until the inner flanges 11, 21 of these fitting members are respectively brought into contact with the inner end faces of the pipes 1, 2. Then, the fitting members 10, fitted in the pipes 1, 2 are screwed onto the opposite halves of the connecting rod 30, respectively. At this time, each of the fitting members 10, 20 is rapidly advanced toward an axially center part of the connecting rod 30 with a small number of revolutions because of the provision of the internal threads of the fitting members which are engaged with the external threads of the connecting rod 30, each thread having the considerably large angle, e.g., 150°.

When the stopper 12 or 22 of either one of the fitting members 10, 20 is brought into contact with the outer end face of the connecting rod 30, the axial travel of the fitting member 10 or 20 along the connecting rod 30 is caused to stop. The resultant total axial travel amount of the fitting member 10 or 20 is slightly larger than the half of the axial length L2 of the connecting rod 30.

Whereupon, another fitting member 20 or 10 is further advanced. When the inner flange 21 or 11 of this fitting member 20 or 10 is brought into contact with the inner flange 11 or 21 of the different fitting member, the axial travel of the former fitting member is caused to stop, with its stopper kept out of contact with the associated end face of the connecting rod. In this manner, the state where the inner flanges 11, 21 of the fitting members 10, 20 are in contact with each other can be achieved before both the stoppers 12, 22 of the fitting members are in contact with the opposite end faces of the connecting rod 30 because the sum L1 of the lengths of the fitting members 10, 20 is larger than the length L2 of the connecting rod 30, as mentioned above. This makes it possible to prevent an unfavorable state such that the stoppers 12, 22 are contacted with the opposite end faces of the connecting rod 30 to stop the axial travel of both the fitting members 10, 20 before their inner flanges 11, 21 are in contact with each other. Thus, no gap which is a cause of stress concentration is produced between the inner flanges.

Then, the first and second pipes 1, 2 respectively fitted on the first and second fitting members 10, 20 which are in contact with each other are further forcedly rotated. At this time, each fitting member is prevented from further axially inwardly moving along the connecting rod 30, and hence the internal threads 13 or 23 of each fitting member 10 or 20 run on the external threads 31 of the connecting rod 30, to cause the fitting member to be radially expanded.

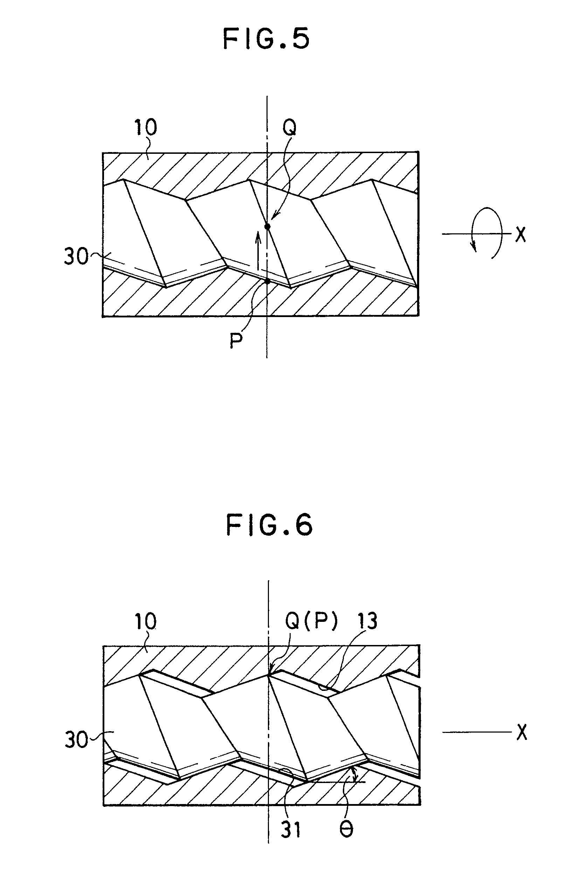

More specifically, upon forced rotation of, e.g., the first fitting member 10 in the direction shown by an arrow in Fig. 5, the internal threads 13 of the fitting member 10 whose axial movement is prevented run on the external threads 31 of the connecting rod 30 in such a manner that a typical point P of the flank face of each internal thread 13 moves on the flank face of 1'5 the associated external thread 31 in the direction perpendicular to the axis x of the connection rod 30. As a result, the flank face point P of the internal thread 13 moves from a first flank face point P of the external thread 31 to a second flank face point Q whose radial distance from the axis of the connecting rod 30 is larger than the radial distance at the first flank face point P . In other words, the radial distance of the flank face point P of each internal thread is increased by the forced rotation of the fitting member 10, and hence, the fitting member is radially expanded. The second fitting member 20 is also radially expanded when it is forcedly rotated.

As explained above, the thread angle is set to the predetermined value varying from 120° - 160°, e.g., 150°, which is considerably larger than an ordinary thread angle of 60°. This prevents an excessive increase of the radial distance between the flank face points P and Q . If the thread angle is too small, i.e., if the increase in the radial distance of the thread face from the rod axis with the forced rotation of the fitting member is too large, the axial inward movement of the fitting member attributable to the forced rotation is liable to occur, whereas the peripheral movement and the radial expansion of the fitting member is liable to be disturbed.

In the embodiment using the threads each having the predetermined large thread angle, the forced rotation produces a force component causing the radial expansion of the fitting member which is larger than another resultant force component causing the axial movement of the fitting member. In other words, it is considered that each of the internal threads 13, 23 of the fitting members 10, 20 has a function of a wedge which is forcedly inserted into a gap between the inner periphery of the pipe concerned and the outer periphery of the connecting rod 30, for the radial expansion of the fitting member. Meanwhile, if a wedge angle $\theta$ (Fig.

6) is too large, the wedge insertion to the gap becomes difficult, while disengagement of the wedge therefrom is liable to occur.

The forced rotation of the fitting members 10, 20 causes these members to be brought into urged contact with the inner peripheries of the pipes 1 and 2, respectively. Moreover, the fitting members 10 and 20 are axially inwardly urged by the engagement of the internal threads 13, 23 of these members with the external threads 31 of the connecting rod 30, so that the fitting members are forcedly contacted at their flanges 11, 21 with each other. This prevents axial outward movements of the fitting members 10, 20, so that a gap never be produced between the fitting members when the resultant pipe arrangement is in use.

As a consequence, a rigid connection of the pipes free from play can be achieved, wherein the fitting members are kept urged with each other in the axial direction and urged with the pipes in the radial direction.

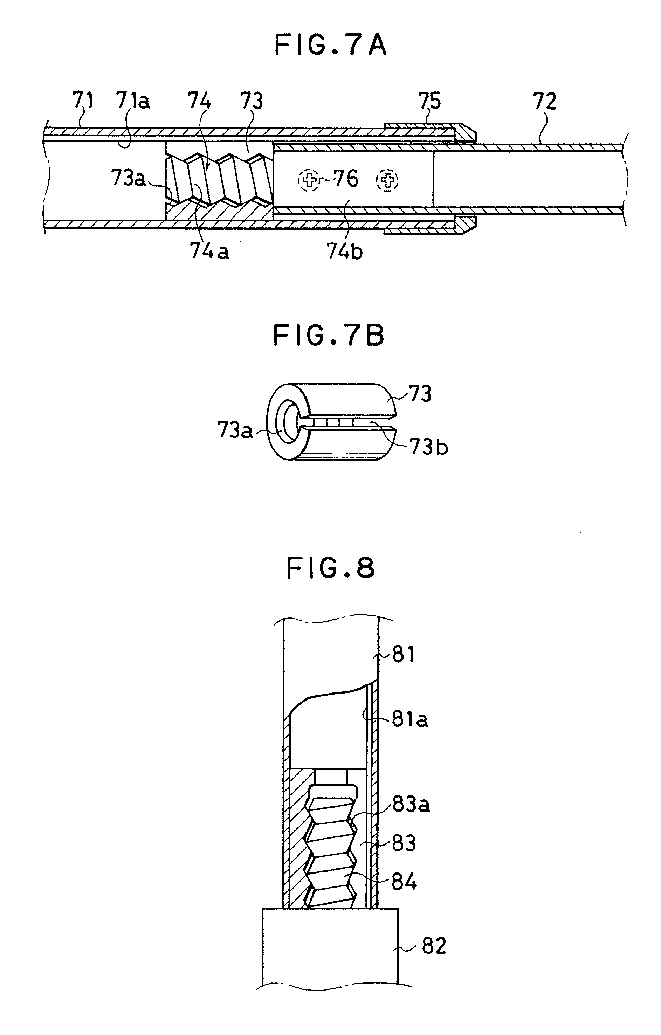

With reference to Figs. 7A and 7B, an explanation of a pipe fixture according to a second embodiment of the present invention is as follows:

This pipe fixture is designed to connect a first pipe 71 having a large diameter with a second pipe 72 having a small diameter in such a manner that the length or depth of that part of the second pipe 72 which is received by the first pipe 71 is adjustable. Namely, the pipe fixture cooperates with the first and second pipes 71, 72 to form an extension/contraction i5 pipe. Meanwhile, the first pipe 71 is formed at the inner periphery with a linear protuberance 71a which extends axially of the first pipe 71, like the first pipe 1 of Fig. 1, whereas the second pipe 72 is not provided with such protuberance.

The pipe fixture comprises a single fitting member 73 fitted in the first pipe 71, a single connecting rod 74 fixed to the second pipe 72, and a cylindrical cap 75. The fitting member 73 and the connecting rod 74 are basically the same in construction as those of the fitting members 10, 20 and the connecting rod 30 of the first embodiment. Hence, detailed explanations thereof will be partly omitted.

In the fitting member 73, a female screw having a relatively large thread angle, e.g.150° is formed.

Further, the fitting member 73 is formed with an expansion groove 73b which extends axially of the fitting member 73, and which receives the linear protuberance 71a of the pipe 71. Thus, the fitting member 73 is arranged for freely sliding axial. movement along the protuberance 71a of the pipe 71.

The connecting rod 74 is formed with external threads 74a for engagement with the internal threads 73a, and has its outer end portion or head 74b received by the inner end portion of the second pipe 72 and fixed to the pipe inner end by means of fastening screws 76.

Upon assembly of the flexible pipe at first, the fitting member 73 is axially movably fitted in the inner end portion of the first pipe 71. Then, the inner end portion of the second pipe 72 is inserted into the inner end portion of the first pipe 71, and the connection rod 74, fastened to the second pipe 72 by the screws 76, is screwed into the fitting member 73. Subsequently, the depth of that part of the second pipe 72 which is received by the first pipe 71 is adjusted by pulling out the second pipe and pushing the same and into the first pipe, so as to adjust the combined length of both the pipes to a desired length.

Whereupon, one of the pipes, e.g., the second pipe 72 is rotated in the direction of screwing the same pipe into the other pipe or the first pipe 71 which is unrotatably supported by an appropriate means, while the combined length of both the pipe is kept unchanged. By doing this, the fitting member 73, which is movably fitted in the first pipe 71, and is engaged with the protuberance 71a of the pipe 71, and is further formed with the internal threads 73a engaged with the external threads 74a of the connecting rod 74, is axially moved along the protuberance 71a toward the second pipe 72 until the inner end face of the fitting member 73 is brought in contact with the opposed end face of the second pipe 72, so that the axial movement of the fitting member is caused to stop.

When the second pipe 72 is further rotated, the internal threads 73a of the fitting member 73 run on the external threads 74a of the connecting rod 74, whereby the fitting member 73 is radially expanded, as in the first embodiment. Consequently, the fitting member 73 is brought into urged contact with the inner periphery of the first pipe 71, and is kept firmly connected to the same pipe by the wedge function of the internal threads 73a. The cylindrical cap 75 disposed at the inner end of the first pipe 71 for covering the gap between the first and second pipes 71, 72 serves to prevent a pivotal movement of the second pipe 72 relative to the first pipe 71. From the view point of preventing the pivotal movement of the second pipe, preferably, the length of the pipe fixture is set to a relatively large value.

To dismantle the pipe fixture or re-adjust the whole length of the expansion/contraction pipe, the second pipe 72 is rotated in the reverse direction so as to release the secure connection between the first and second pipes 71, 72.

With reference to Fig. 8, a pipe fixture according to a third embodiment of the present invention will be explained.

This pipe fixture is arranged to connect a pipe 81 to a stationary shaft 82. To this end, the pipe fixture comprises a fitting member 83 fitted in the pipe 81, and a connecting rod 84 fixed to the stationary shaft 82. The fitting member 83 corresponds to the first and second fitting member 10 and 20 of Fig. 1, and the connecting rod 84 corresponds to the connecting rod 30 of Fig. 1, and accordingly detailed descriptions of these elements 83 and 84 will be omitted.

To connect the pipe 81 to the stationary shaft 82 by the use of the pipe fixture, at first, the fitting member 83 is fittedly inserted into the inner end portion of the pipe 81, with its expansion groove fitted in a linear protuberance 81a. Then, the fitting member 83 fitted in the pipe is threadedly engaged with the connecting rod 84 fixed to the stationary shaft 82.

The fitting member 83 is axially moved toward the shaft 82 while it is screwed onto the connecting rod 84, and then the inner end face of the fitting member 83 is brought into contact with the opposed end face of the shaft 82. Whereupon, the fitting member 83 and the pipe 81 are further rotated, so that the fitting member 83 is radially expanded and axially urged toward the shaft 82 by means of the wedge function of the internal threads 83a of the fitting member 83. Thus, the pipe 81 and the shaft 82 are firmly connected to each other, with no gap formation therebetween, by means of the pipe fixture having the fitting member 83 which cooperates with the connecting rod 84.

The present invention is not limited to the foregoing first through third embodiments, and may be modified in various ways.

For instance, although the pipe fixture for connecting pipes which are disposed horizontally when they are in use has been explained in the first embodiment, the present invention may be applied to pipes which are disposed vertically in service.

In the case of using a pipe fixture in a condition that it undergoes a rotary torque exerting in the direction of releasing secure axial connection between a fitting member and a connecting member and hence releasing secure radial connection between the fitting member and a pipe, a retainer or whirl-stop may be provided for prohibiting rotation of the connecting member relative to the fitting member, thereby preventing from the fitting member being disconnected from the pipe. The retainer for preventing the disconnection of the fitting member may be comprised of rivet, screw, male-female fitting or the like.

Moreover, in the first embodiment, a retainer or whirl-stop for preventing rotation of each fitting member relative to the pipe concerned, while permitting relative axial movement therebetween is comprised of the linear protuberance formed in the pipe and the expansion groove or split groove, which is formed in the fitting member and which has a function of a retainer element and a primary function of permitting the fitting member to be radially expanded. Alternatively, a recess, adapted to engage the protuberance, or the like may be formed in the fitting member, in addition to the expansion groove which solely achieves its primary function of permitting the radial expansion of the fitting member.

According to the present invention, the following advantages can be attained.

(i) Since a fitting member of the pipe fixture has its outer periphery firmly urged to the inner periphery of a pipe concerned, and has its end face firmly urged to the opposed end face of another pipe or a stationary member concerned, the secure connection between the pipes or between the pipe and the stationary member, which connection is free from occurrence of play or looseness, can be provided.

(ii) The secure connection can be achieved by the pipe fixture, even if the fixture is composed of components which entail variations in their sizes such as connecting member diameter, fitting member thickness, and pipe inner diameter.

(iii) The pipe fixture requires only a reduced number of components, and is excellent in cost performance.

(iv) The pipe fixture, having a great deal of versatility, can be used to connect pipes to each other, fix a pipe to a stationary member, and realize an extension/contraction pipe.

(v) Since the pipe fixture is received and covered by one or two pipes, the resultant arrangement is excellent in external views. In particular, the resultant pipe connecting arrangement is neat in appearance at that section thereof at which the pipes are connected to each other.

(vi) Since the connecting member and fitting member of the pipe fixture are provided with threads each having a considerably large thread angle, a pipe connecting process can be rapidly achieved solely by rotating the pipe concerned by a small number of rotations.

## Claims

1. A pipe fixture, comprising:
at least one hollow fitting member each fitted in a pipe in such a manner that relative rotation between said at least one hollow fitting member and the pipe is prevented, whereas relative axial movement therebetween is permitted, said at least one hollow fitting member being each formed with a split groove extending along an axis of the fitting member, and each having an inner periphery which is formed with internal threads each having a predetermined large thread angle; and

a connecting member formed with external threads which are engaged with the internal threads of said at least one hollow fitting member.

2. A pipe fixture according to claim 1, wherein the pipe has an inner periphery formed with a protuberance, and the split groove is fittedly engaged with the protuberance, so as to prevent the relative rotation and permit the relative axial movement.

3. A pipe fixture according to claim 1 or 2, wherein the predetermined large thread angle of each of the internal threads is set to a value falling within a range varying from 120° to 160°.

4. A pipe fixture according to claim 1, wherein said pipe fixture includes first and second hollow fitting members respectively fitted in first and second pipes, and said first and second hollow fitting members have inner flanges, respectively, said inner flanges being disposed in contact with each other and with inner end faces of said first and second pipes, respectively.

5. A pipe fixture according to claim 1, wherein said pipe fixture includes a single hollow fitting member axially movably fitted In a first pipe, said connecting member being fixed to an inner end of a second pipe received by said first pipe in a manner axially movable in said first pipe.

6. A pipe fixture according to claim 1, wherein said pipe fixture includes a single hollow fitting member axially movably fitted in the pipe, said connecting member being fixed to a stationary member which has an end face with which said pipe and said single hollow fitting member are contacted.

# FIG.1

# FIG.2

# FIG.3

EP 0 423 990 A1

FIG.4

EP 0 423 990 A1

# FIG.5

# FIG.6

# FIG.7A

71  71a  74  73  75  72

73a  74a  74b  76

# FIG.7B

73a  73  73b

# FIG.8

81  81a  83a  83  84  82

# FIG.9

# FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 873 129   (WARREN F. EDMUNDSON)<br>* column 1, line 62 - column 3, line 21; figures 1, 8 *<br>– – – | 1 | F 16 B 7/04<br>F 16 B 7/18 |
| A | FR-A-1 171 396   (ZAHODIAKIN)<br>* the whole document *<br>– – – | 1-3 | |
| A | US-A-2 388 270   (FRANCIS LE BARRON LORD)<br>* the whole document *<br>– – – | 1,2 | |
| A | US-A-4 013 372   (RALPH B. LAY)<br>– – – – – | | |
| | | | TECHNICAL FIELDS SEARCHED (Int. Cl.5) |
| | | | F 16 B |

The present search report has been drawn up for all claims

| Place of search | Date of completion of search | Examiner |
|---|---|---|
| The Hague | 07 February 91 | ARESO Y SALINAS J. |